# EUROPÄISCHE PATENTANMELDUNG

(11) **EP 3 772 271 A1**
(43) Veröffentlichungstag der Anmeldung: **10.02.2021**
(21) Anmeldenummer: 20173270.8
(22) Anmeldetag: 06.05.2020
(51) Int. Cl.: A01F 25/20, G02B 27/01

(54) **FUTTERMISCHWAGEN**

(30) Priorität: 09.08.2019 DE 202019104407 U
(71) Anmelder: Mayer Verwaltungs GmbH & Co. KG, 84529 Tittmoning (DE)
(72) Erfinder: Mayer, Georg, 84529 Tittmoning (DE)
(74) Vertreter: Flach Bauer Stahl Patentanwälte Partnerschaft mbB

(57) **Zusammenfassung**

Ein Futtermischwagen weist ein Head-Up-Display (7) zum Anzeigen eines die Futtermischwagen-Informationen enthaltenden Bildes (11) auf einer Anzeigescheibe (9) auf, wobei die Position des Bildes (11) auf der Anzeigescheibe (9) in Abhängigkeit der Position einer Futterbefüllvorrichtung (3) veränderbar ist.

## Beschreibung

Die Erfindung betrifft einen Futtermischwagen mit einem Mischbehälter, einer schwenkbaren Futterbefüllvorrichtung zum Befüllen des Mischbehälters und einer Anzeigeeinrichtung zum Anzeigen von Futtermischwagen-Informationen gemäß dem Oberbegriff des Anspruchs 1.

Futtermischwagen werden bekannterweise in der Landwirtschaft zum Mischen von Futtermitteln wie Silage, Mais, Kraftfutter etc. und zum Transportieren des gemischten Futtermittels zu bestimmten Ausbringstellen, beispielsweise zu Futterplätzen in einem Stall, verwendet.

Es sind Futtermischwägen mit einer eigenen Futterbefüllvorrichtung, insbesondere Entnahmefräse, bekannt, mit welcher das zu mischende Futter von einem Futterstock, beispielsweise Fahrsilo, entnommen und in den Mischbehälter befördert wird. Derartige Futtermischwägen haben den Vorteil, dass kein separates Beladefahrzeug erforderlich ist. Die Bedienung einer in den Futtermischwagen integrierten Futterbefüllvorrichtung erfolgt üblicherweise von einer Fahrerkabine des Futtermischwagens aus. Über verschiedene Anzeigeeinrichtungen, insbesondere ein oder mehrere Bildschirme, erhält der Fahrer Informationen über den Zustand und Betrieb des Futtermischwagens, insbesondere über Maschinendaten und Wiegedaten. Die Anzeigeeinrichtungen sind üblicherweise fest in der Kabine montiert.

Futterbefüllvorrichtungen in Form von Entnahmefräsen arbeiten üblicherweise derart, dass die an einem freien Ende eines Schwenkarms bzw. Förderkanals angeordnete Entnahmefräse im Futterstock von oben nach unten bewegt wird, wobei Futtermittel abgefräst und in den Förderkanal geleitet wird. Die Bedienungsperson beobachtet und steuert diesen Fräsvorgang. Dies kann dazu führen, dass die Anzeigeeinrichtungen und möglicherweise kritische Zustands- und Betriebsinformationen unbeachtet bleiben. In jedem Fall ist ein häufiger Blickwechsel zwischen den Anzeigeeinrichtungen und der Entnahmefräse erforderlich, was den Arbeitsablauf erschwert.

Der Erfindung liegt daher die Aufgabe zugrunde, einen Futtermischwagen der eingangs genannten Art zu schaffen, der es ermöglicht, dass der Bedienungsperson auch dann, wenn sie den Beladevorgang beobachtet, auf möglichst ergonomische Weise Futtermischwagen-Informationen, insbesondere Maschinen- und/oder Wiegedaten, zur Verfügung gestellt werden.

Diese Aufgabe wird erfindungsgemäß durch einen Futtermischwagen mit den Merkmalen des Anspruchs 1 gelöst.

Vorteilhafte Ausgestaltungen der Erfindung sind in den weiteren Ansprüchen beschrieben.

Beim erfindungsgemäßen Futtermischwagen umfasst die Anzeigeeinrichtung ein Head-Up-Display zum Anzeigen eines die Futtermischwagen-Informationen enthaltenden Bildes auf einer Anzeigescheibe, wobei die Position des Bildes auf der Anzeigescheibe in Abhängigkeit der Position der Futterbefüllvorrichtung veränderbar ist.

Das Head-Up-Display ermöglicht es, dass die Bedienungsperson die Futtermischwagen-Informationen, insbesondere Maschinen- und/oder Wiegedaten, jederzeit im Sichtfeld hat. Besonders vorteilhaft ist es hierbei, dass sich das Bild des Head-Up-Displays mit der Futterbefüllvorrichtung mitbewegen kann. Die Bedienungsperson muss daher den Blick nicht von der Futterbefüllvorrichtung, beispielsweise Entnahmefräse, lösen, wenn sie über die Maschinen- und/oder Wiegedaten informiert sein möchte. Die Bedienungsperson hat die Futtermischwagen-Informationen ständig direkt vor Augen, auch wenn sich die Futterbefüllvorrichtung bewegt und die Bedienungsperson die Futterbefüllvorrichtung beobachtet.

Vorteilhafterweise ist die Futterbefüllvorrichtung in einer vertikalen Ebene zwischen einer oberen und unteren Position schwenkbar, wobei die Position des Bildes auf der Anzeigescheibe in der oberen Position der Futterbefüllvorrichtung höher ist als in der unteren Position der Futterbefüllvorrichtung. Die vertikale Positionsveränderung des Bildes ist insbesondere bei Futterbefüllvorrichtungen mit einer vertikal bewegbaren Entnahmefräse vorteilhaft.

Gemäß einer vorteilhaften Ausführungsform folgt die Höhenposition des Bildes auf der Anzeigescheibe kontinuierlich der Schwenkbewegung der Futterbefüllvorrichtung. Alternativ hierzu ist es auch möglich, dass sich die Höhenposition des Bildes diskontinuierlich, d.h. stufenartig, ändert.

Vorzugsweise ist die Anzeigescheibe eine transparente Frontscheibe einer Fahrerkabine des Futtermischwagens. Das erfindungsgemäße Prinzip ist jedoch auch unter Verwendung anderer transparenter Scheiben einsetzbar, auf welche die Futtermischwagen-Informationen projiziert oder auf andere Weise eingeblendet werden.

Die Erfindung wird nachfolgend anhand der Zeichnung beispielhaft näher erläutert. Die einzige Figur zeigt schematisch einen Teil eines erfindungsgemäßen Futtermischwagens mit einer Fahrerkabine und einer Futterbefüllvorrichtung, die eine Entnahmefräse umfasst.

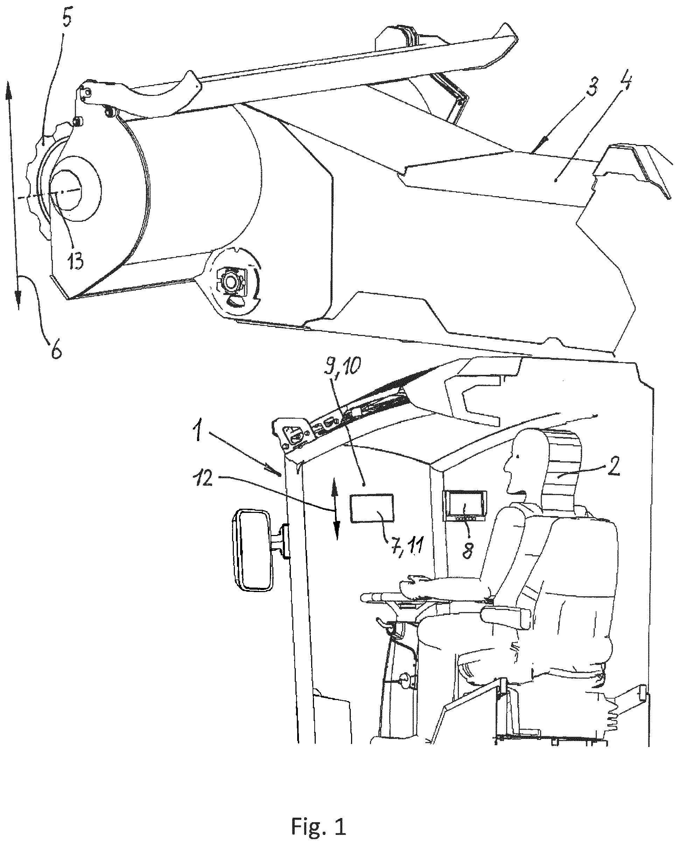

Figur 1 zeigt eine Fahrerkabine 1 eines selbstfahrenden Futtermischwagens, in der sich eine Bedienungsperson 2 befindet. Die Fahrerkabine 1 befindet sich üblicherweise am vorderen Ende des Futtermischwagens. Hinter der Fahrerkabine 1, d.h. in Figur 1 rechts neben dieser, befindet sich ein nicht dargestellter Mischbehälter, in dem sich mindestens ein Mischwerkzeug, insbesondere mindestens eine Vertikalmischschnecke, befindet. Der Mischbehälter ist üblicherweise nach oben hin offen und kann damit von oben her mit Futtermittel befüllt werden.

Die Befüllung des Mischbehälters erfolgt mittels einer Futterbefüllvorrichtung 3, von der in Figur 1 lediglich der vordere Teil eines Förderkanals 4 und eine am vorderen Ende des Förderkanals 4 angeordnete Entnahmefräse 5 gezeigt ist. Die Entnahmefräse 5 ist um eine Achse 13 drehbar.

Die Futterbefüllvorrichtung 3 ist an ihrem hinteren Ende derart schwenkbar gelagert, dass ihr vorderes Ende, an dem die Entnahmefräse 5 befestigt ist, in einer vertikalen Ebene, d.h. nach oben und unten, verschwenkt werden kann. Dies ist durch den Pfeil 6 verdeutlicht. Die Entnahmefräse 5 kann auf diese Weise zwischen einer erhöhten Position, in der sie sich üblicherweise höher als die Fahrerkabine 1 befindet, und einer unteren, bodennahen Position verschwenkt werden kann. Beim Absenken der Futterbefüllvorrichtung 3 in die bodennahe Position wird der Förderkanal 4 neben der Fahrerkabine 1 abgesenkt, die zu diesem Zwecke seitlich neben dem Förderkanal 4 angeordnet ist.

Futtermischwagen-Informationen, insbesondere Maschinen- und/oder Wiegedaten, werden der Bedienungsperson 2 mittels einer Anzeigeeinrichtung angezeigt, die ein lediglich schematisch dargestelltes Head-Up-Display 7 umfasst. Zusätzlich zum Head-Up-Display 7 kann die Anzeigeeinrichtung auch noch andere Anzeigemittel, beispielsweise einen Bildschirm 8 umfassen, der an oder in der Fahrerkabine 1 befestigt ist.

Das Head-Up-Display 7 erzeugt auf einer Anzeigescheibe 9, die im dargestellten Ausführungsbeispiel eine transparente Frontscheibe 10 der Fahrerkabine 1 ist, ein Bild 11, das auf die Anzeigescheibe 9 projiziert wird. Das Head-Up-Display 7 ist dabei derart mit der Futterbefüllvorrichtung gekoppelt, dass eine Bewegung der Entnahmefräse 5 in vertikaler Richtung eine entsprechende Positionsverlagerung des Bildes 11 in vertikaler Richtung zur Folge hat, wie durch den Pfeil 12 dargestellt. Die Höhenposition des Bildes 11 ist somit in einer vorbestimmten Weise mit der Höhenposition der Entnahmefräse 5 korreliert. Bewegt sich die Entnahmefräse 5 nach unten, bewegt sich das Bild 11 ebenfalls nach unten, wobei es immer im Sichtfeld der Bedienungsperson 2 bleibt. Bei einer Bewegung der Entnahmefräse 5 nach oben wandert das Bild 11 entsprechend nach oben mit. Auf diese Weise hat die Bedienungsperson 2 die Futtermischwagen-Informationen ständig im Blick.

Im gezeigten Ausführungsführungsbeispiel ist die Frontscheibe 10 zumindest über einen größeren Teilbereich, insbesondere zumindest über ihre obere Hälfte, als teilweise spiegelnde, jedoch lichtdurchlässige, transparente Scheibe ausgebildet, welche die Projektionsfläche bildet. Die nicht dargestellte bildgebende Einheit kann an geeigneten Stellen an oder innerhalb der Fahrerkabine 1 angeordnet sein.

Alternativ zum gezeigten Ausführungsbeispiel, bei dem die Position des Bildes 11 in vertikaler Richtung veränderbar ist, ist es bei Futterbefüllvorrichtungen, die nicht vertikal geschwenkt, sondern in anderen Richtungen bewegt werden, auch denkbar, dass das Bild 11 in anderen Richtungen, beispielsweise horizontal, mit der Bewegung der Futterbefüllvorrichtung 3 mitgeführt wird.

## Patentansprüche

1. Futtermischwagen mit einem Mischbehälter, einer schwenkbaren Futterbefüllvorrichtung (3) zum Befüllen des Mischbehälters und einer Anzeigeeinrichtung zum Anzeigen von Futtermischwagen-Informationen, **dadurch gekennzeichnet, dass** die Anzeigeeinrichtung ein Head-Up-Display (7) zum Anzeigen eines die Futtermischwagen-Informationen enthaltenden Bildes (11) auf einer Anzeigescheibe (9) umfasst, wobei die Position des Bildes (11) auf der Anzeigescheibe (9) in Abhängigkeit der Position der Futterbefüllvorrichtung (3) veränderbar ist.

2. Futtermischwagen nach Anspruch 1, **dadurch gekennzeichnet,** die Futterbefüllvorrichtung (3) in einer vertikalen Ebene zwischen einer oberen und einer unteren Position schwenkbar ist, wobei die Position des Bildes (11) auf der Anzeigescheibe (9) in der oberen Position der Futterbefüllvorrichtung (3) höher ist als in der unteren Position der Futterbefüllvorrichtung (3).

3. Futtermischwagen nach Anspruch 1 oder 2, **dadurch gekennzeichnet, dass** die Höhenposition des Bildes (11) auf der Anzeigescheibe (9) kontinuierlich der Schwenkbewegung der Futterbefüllvorrichtung (3) folgt.

4. Futtermischwagen nach einem der vorhergehenden Ansprüche, **dadurch gekennzeichnet, dass** das Head-Up-Display (7) ausgebildet ist, Maschinen- und/oder Wiegedaten des Futtermischwagens anzuzeigen.

5. Futtermischwagen nach einem der vorhergehenden Ansprüche, **dadurch gekennzeichnet, dass** die Anzeigescheibe (9) eine transparente Frontscheibe (10) einer Fahrerkabine (1) ist.
